# FASCICULE DE BREVET EUROPEEN

(11) **EP 2 997 583 B1**
(45) Date de publication et mention de la délivrance du brevet: **15.03.2017**
(21) Numéro de dépôt: 14725142.5
(22) Date de dépôt: 16.05.2014
(51) Int. Cl.: H01B 17/56, H01B 17/60, H01B 3/30, A47G 27/02, H01B 3/28, H01B 3/44, H02G 1/00

(54) **TAPIS ISOLANT, NOTAMMENT POUR ÉLECTRICIEN DE RÉSEAU**
ISOLIERMATTE, INSBESONDERE FÜR NETZWERKELEKTRIKER
INSULATING MAT, IN PARTICULAR FOR NETWORK ELECTRICIAN

(30) Priorité: 16.05.2013 FR 1354418
(43) Date de publication de la demande: 23.03.2016
(73) Titulaire: Sibille Fameca Electric, 26780 Malataverne (FR)
(72) Inventeur: DYKMAN, Florent, F-26780 Malataverne (FR); ROUVEURE, Pascal, F-26780 Malataverne (FR)
(74) Mandataire: Regimbeau
(86) Numéro de dépôt international: PCT/EP2014/060159
(87) Numéro de publication internationale: WO 2014/184375

(56) Documents cités:
- JP-A- 2005 073 304
- US-A- 5 718 096
- US-A1- 2002 165 320

## Description

### DOMAINE DE L'INVENTION

La présente invention concerne les tapis isolants, notamment pour électricien de réseau.

Plus particulièrement, l'invention concerne les tapis isolants en élastomère utilisé pour couvrir le sol en vue de la protection électrique d'un opérateur intervenants dans des installations électriques.

### ETAT DE LA TECHNIQUE

Les tapis isolants font partie des équipements de protection qui sont indispensables lors des travaux sur les installations électriques. Ils isolent les opérateurs du sol afin de sécuriser leurs interventions.

Ils sont en particulier obligatoires pour les interventions dans des postes de transformation haute tension, mais sont également utilisés dans le cadre d'autres interventions, par exemple pour des interventions sur des armoires électriques.

Ils peuvent faire partie de l'équipement permanent prévu pour certains postes, tels que des postes de transformation électriques. Ils peuvent également faire partie de l'équipement individuel de l'électricien.

Ces tapis isolants sont habituellement constitués en matériaux élastomères et ont des épaisseurs choisies pour leur conférer les caractéristiques diélectriques et mécaniques attendues.

En France notamment, ces tapis isolants doivent être conformes à la norme CEI 61111 :2009, actuellement seul référentiel international concernant les tapis isolants.

La norme CEI 61111 :2009 définit en particulier cinq classes de tapis isolants en fonction de la tension nominale maximale du réseau où ils sont utilisés.

| | Tension maximale d'utilisation Courant alternatif | Tension maximale d'utilisation Courant continu |
|---|---|---|
| Classe 0 | 1000V | 1500V |
| Classe 1 | 7500V | 11250V |
| Classe 2 | 17000V | 25500V |
| Classe 3 | 26500V | 39750V |
| Classe 4 | 36000V | 54000V |

Les tapis isolants conformes à cette norme doivent en outre respecter un certain nombre d'autres conditions, en particulier de tenue en température ou de tenue mécanique.

Une condition importante est en particulier la tenue des tapis à la perforation.

Pour respecter les différentes conditions imposées par la norme et en particulier celles relatives à la tenue à la perforation, les fabricants de tapis produisent en règle générale des tapis d'une seule épaisseur, qui couvrent plusieurs classes de la gamme.

Ainsi, l'épaisseur des tapis présents sur le marché est supérieure à l'épaisseur suffisante pour satisfaire aux exigences de la norme CEI 61111 :2009 d'un point de vue purement diélectrique. Il en résulte des tapis excessivement épais et lourds et peu manipulables, y compris pour ceux vendus pour la gamme adaptée aux tensions relativement faibles.

Le document US 2002/165320 divulgue un tapis électriquement isolant selon le préambule de la revendication 1.

Ceci constitue un inconvénient important, en particulier, pour les électriciens qui doivent transporter eux-mêmes leurs tapis individuels.

### EXPOSE DE L'INVENTION

Un but de l'invention est de proposer une structure de tapis isolant qui ne présente pas les inconvénients des tapis isolants connus.

Plus particulièrement, un but de l'invention est de proposer une structure qui permette notamment pour les tapis destinés aux classes de la gamme correspondant aux tensions les plus faibles, des tapis isolants plus légers et plus faciles à manipuler, tout en étant conformes aux conditions de la norme tant sur le plan diélectrique que sur le plan mécanique et en particulier en terme de tenue à la perforation.

A cet effet, l'invention propose un tapis électriquement isolant comportant une ou plusieurs couches de matériaux diélectriques et une couche intermédiaire de renfort à la perforation.

La couche intermédiaire est par exemple en un matériau tramé (trames de coton et/ou de fibres d'aramide ou autres), d'autres types de matériaux étant néanmoins également envisageables.

Une telle structure présente une meilleure tenue mécanique que les tapis classiques de la même épaisseur.

Le fait d'utiliser une couche intermédiaire de renfort à la perforation, notamment une couche en un matériau tramé, permet avantageusement de réduire l'épaisseur du tapis pour des performances mécaniques et diélectriques classiques et ainsi d'adapter l'épaisseur des tapis aux performances de tenue aux tensions nominales recherchées.

Il est ainsi possible de disposer d'un ensemble (gamme) de plusieurs tapis électriquement isolants dont les marquages indiquent qu'ils sont destinés à des tenues à des tensions nominales différentes et qui sont d'épaisseurs différentes, ce qui permet à l'utilisateur de disposer de tapis plus légers et plus maniables pour certaines tensions nominales.

### DESCRIPTION DE LA OU DES FIGURES

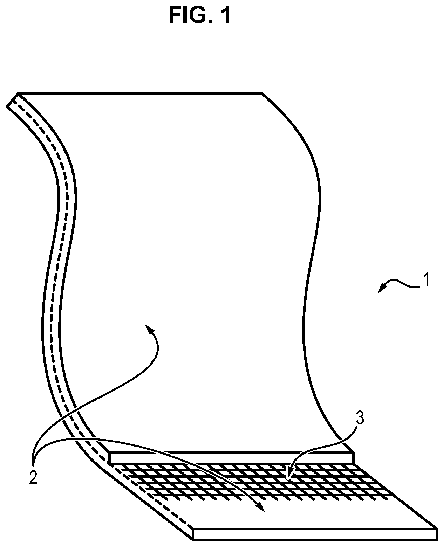

La figure 1 est une représentation schématique en perspective avec arraché illustrant un exemple de réalisation possible pour l'invention.

### DESCRIPTION DETAILLEE DE L'INVENTION

Le tapis isolant 1 illustré sur la figure 1 comporte une ou plusieurs couches 2 en un matériau élastomère, ainsi qu'une couche 3 de renfort résistante à la perforation.

La ou les couches 2 sont par exemple des couches en un matériau isolant diélectrique, par exemple caoutchouc, polychlorure de vinyle, polyuréthane, ou un élastomère thermoplastique comme un éthylène-propylène-diène monomère (EPDM).

La couche 3 intermédiaire résistante à la perforation peut être une couche en un matériau tramé, notamment une couche en trames et chaines de coton ou de fibres aramide.

Les dimensions de trames (distance d'une trame ou chaine à une autre) sont inférieures à 4mm et préférentiellement comprises entre à 0,5 et 2mm.

Cette couche 3 a une épaisseur inférieure à 2mm.

L'épaisseur totale de la contexture (couche(s) 2 et 3) qui constitue le tapis est comprise entre 1,5mm et 5mm et peut être inférieure ou égale à 2,5 mm pour les classes 0, 1 et 2.

D'autres matériaux sont encore possible pour la couche 3 par exemple un matériau composite, notamment à base de polytéréphtalate d'éthylène.

Ce matériau peut être tramé, sa trame pouvant être réalisée par un simple gaufrage mécanique.

Dans le cas d'une couche 2 unique, celle-ci peut être réalisée par injection, la couche 3 étant noyée dans ladite couche 2.

En variante, dans le cas où la couche 3 est interposée entre deux couches 2, le tapis isolant 1 peut être réalisé par calandrage, la couche 3 étant déroulée entre deux couches 2 dans un procédé de réalisation continu.

Le tapis ainsi réalisé a une épaisseur qui varie en fonction de la classe de la norme CEI 61111 :2009 à laquelle il correspond, pour des raisons avant tout de propriétés diélectriques.

Il est par exemple d'une épaisseur de 4,5 mm pour la classe 4, de 3mm pour la classe 3, de 2,5 mm pour la classe 2 et inférieur à 2mm pour les classes 0 et 1.

On dispose ainsi d'une gamme complète de tapis couvrant l'ensemble des différentes classes et dont les épaisseurs sont adaptées en fonction de la tenue à la tension nominale recherchée. En outre, les tapis peuvent avoir par exemple 3 largeurs différentes : 0,6m, 1 m, ou 1,20m, ainsi que plusieurs longueurs, par exemple : 1m, 3m, 5m ou 10m, jusqu'à 100 m dans certains cas.

Les tapis isolants tels que décrits ont fait l'objet de test selon la norme internationale CEI 61111 :2009 et notamment pleinement à la norme, notamment sur la tenue à la perforation.

Le tapis 1 présente en outre une surface antidérapante, de façon à protéger les électriciens des risques de chutes et de glissades.

La couleur du marquage est réalisée selon le code couleur de la CEI 61111. Ces informations sont rappelées sur chacun des tapis.

Notamment, le marquage de chaque tapis indique une tenue à une tension nominale donnée.

Il est ainsi possible de disposer d'un ensemble de tapis isolants dont les marquages indiquent qu'ils sont destinés à des tenues à des tensions nominales différentes et dont les épaisseurs sont différentes.

Pour certaines tensions nominales notamment, l'utilisateur dispose alors de tapis plus légers et plus maniables, ce qui lui fournit un confort supplémentaire.

Les tapis isolants proposés peuvent être utilisés, par exemple, par les électriciens lors des travaux qui présentent des risques électriques ainsi que par tous les techniciens qui travaillent sur toutes sortes d'appareils électriques sous tension.

Les tapis isolants selon l'invention peuvent être également utilisés dans le domaine d'automobile hybride pour protéger le conducteur et les passagers de la voiture hybride contre les éventuels risques électriques, ainsi que tout opérateur devant intervenir pour de la maintenance ou réparation dudit véhicule.

## Revendications

1. Tapis électriquement isolant (1) comportant une ou plusieurs couches (2) de matériau diélectrique, **caractérisé en ce qu'**il comporte une couche intermédiaire de renfort à la perforation (3) et **en ce que** la couche intermédiaire est en un matériau tramé.

2. Tapis électriquement isolant (1) selon la revendication 1, **caractérisé en ce que** la couche intermédiaire (3) est en trames de coton et/ou en trames de fibres d'aramide.

3. Tapis électriquement isolant (1) selon la revendication 1, **caractérisé en ce que** la couche intermédiaire (3) est de dimensions de trames inférieures à 4mm.

4. Tapis électriquement isolant selon la revendication 3, **caractérisé en ce que** la couche intermédiaire (3) est de dimensions de trames comprises entre à 0,5 et 2mm.

5. Tapis électriquement isolant selon l'une des revendications 1 à 4, **caractérisé en ce qu'**il est d'une épaisseur comprise entre 1,5 mm et 5 mm.

6. Tapis électriquement isolant selon la revendication 5, pour classe 0, 1 ou 2 de la norme CEI 61111 :2009, **caractérisé en ce qu'**il est d'une épaisseur inférieure ou égale à 2,5 mm.

7. Ensemble de plusieurs tapis électriquement isolants présentant chacun un marquage indiquant une tenue à une tension nominale donnée, **caractérisé en ce que** lesdits tapis sont des tapis électriquement isolants comportant chacun une ou plusieurs couches de matériau diélectrique et une couche intermédiaire de renfort à la perforation en un matériau tramé et **en ce que** des tapis isolants dont les marquages indiquent une tenue à des tensions nominales différentes sont d'épaisseurs différentes.

## Patentansprüche

1. Elektrisch isolierende Matte (1), die eine oder mehrere Schichten (2) dielektrischen Werkstoffs umfasst, **dadurch gekennzeichnet, dass** sie eine Zwischenschicht zur Verstärkung gegen Perforierung (3) umfasst, und dadurch, dass die Zwischenschicht aus einem Rasterwerkstoff besteht.

2. Elektrisch isolierende Matte (1) nach Anspruch 1, **dadurch gekennzeichnet, dass** die Zwischenschicht (3) aus Baumwollrastern und/oder aus Aramidfaserrastern besteht.

3. Elektrisch isolierende Matte (1) nach Anspruch 1, **dadurch gekennzeichnet, dass** die Zwischenschicht (3) Rastermaße kleiner als 4 mm hat.

4. Elektrisch isolierende Matte nach Anspruch 3, **dadurch gekennzeichnet, dass** die Zwischenschicht (3) Rastermaße zwischen 0,5 und 2 mm hat.

5. Elektrisch isolierende Matte nach einem der Ansprüche 1 bis 4, **dadurch gekennzeichnet, dass** sie eine Stärke zwischen 1,5 mm und 5 mm hat.

6. Elektrisch isolierende Matte nach Anspruch 5, für Klasse 0, 1 oder 2 der Norm IEC 61111:2009, **dadurch gekennzeichnet, dass** sie eine Stärke kleiner oder gleich 2,5 mm hat.

7. Einheit aus mehreren elektrisch isolierenden Matten, die jeweils eine Kennzeichnung aufweisen, die eine Beständigkeit gegenüber einer gegebenen Nennspannung angibt, **dadurch gekennzeichnet, dass** die Matten elektrisch isolierende Matten sind, die jeweils eine oder mehrere Schichten dielektrischen Werkstoffs und eine Zwischensicht zur Verstärkung gegen Perforierung aus einem Rasterwerkstoff umfassen, und dadurch, dass isolierende Matten, deren Kennzeichnungen eine Beständigkeit gegenüber unterschiedlichen Nennspannungen angibt, unterschiedliche Stärken haben.

## Claims

1. Electrically insulating mat (1) comprising one or more layers (2) of dielectric material, **characterised in that** it comprises an intermediate layer (3) that reinforces against puncture and **in that** the intermediate layer is made of a weft material.

2. Electrically insulating mat (1) according to claim 1, **characterised in that** the intermediate layer (3) is made from wefts of cotton and/or wefts of aramid fibres.

3. Electrically insulating mat (1) according to claim 1, **characterised in that** the intermediate layer (3) has weft dimensions less than 4 mm.

4. Electrically insulating mat according to claim 3, **characterised in that** the intermediate layer (3) has weft dimensions between 0.5 and 2 mm.

5. Electrically insulating mat according to one of claims 1 to 4, **characterised in that** it is of a thickness between 1.5 mm and 5 mm.

6. Electrically insulating mat according to claim 5, for class 0, 1 or 2 of the standard IEC 61111:2009, **characterised in that** it is of a thickness less than or equal to 2.5 mm.

7. Set of several electrically insulating mats with each one having a marking that indicates a given nominal voltage performance, **characterised in that** said mats are electrically insulating mats with each one comprising one or more layers of dielectric material and an intermediate layer that reinforces against puncture made of a weft material and **in that** insulating mats of which the markings indicate a different nominal voltage performance are of different thicknesses.
